# EUROPÄISCHE PATENTSCHRIFT

(11) **EP 1 761 370 B1**
(45) Veröffentlichungstag und Bekanntmachung des Hinweises auf die Patenterteilung: **10.12.2008**
(21) Anmeldenummer: 04791223.3
(22) Anmeldetag: 14.10.2004
(51) Int. Cl.: B27D 1/00, B32B 21/14

(54) **FURNIERTE PLATTE**
VENEERED PANEL
PANNEAU CONTREPLAQUÉ

(30) Priorität: 25.06.2004 DE 202004010083 U
(43) Veröffentlichungstag der Anmeldung: 14.03.2007
(73) Patentinhaber: Interglarion Limited, 2404 Engomi, Nikosia (CY)
(72) Erfinder: SCHUSTER, Johannes, A-5020 Salzburg (AT)
(74) Vertreter: Gille Hrabal Struck Neidlein Prop Roos
(86) Internationale Anmeldenummer: PCT/EP2004/052536
(87) Internationale Veröffentlichungsnummer: WO 2006/000253

(56) Entgegenhaltungen:
- DE-A1- 19 653 899
- US-A- 4 865 912
- US-A- 5 089 348
- US-A- 5 955 203

## Beschreibung

Die Erfindung betrifft eine furnierte Platte , sowie ein Verfahren zur Herstellung derselben.

Furnierte Platten werden insbesondere für die Möbelindustrie hergesteilt. Dabei geht es darum, eine preiswerte Trägerplatte mit einer anspruchsvollen Oberfläche zu versehen und somit zu veredeln. Diese Oberfläche besteht aus dünnen Schichten aus Naturholz von typischerweise 0,5 bis 0,9 mm Stärke. Die aus derartigen Platten hergestellten Möbel, Wand- oder Bodenpaneele oder dergleichen erhalten somit eine höhere Wertigkeit, da der Betrachter aufgrund der natürlichen Maserung der Furniere den Eindruck von edlem und im Vergleich zur Trägerplatte wesentlich teuerem Massivholz erhält. Außerdem sind derartige Flächen schöner anzusehen. Zum Schutz der nur oberflächlich aus Naturholz gebildeten Oberfläche gegen Verschmutzung, Beschädigung und das Eindringen von Staub in die Poren des Furniers erhält die furnierte Platte eine Lackschicht, die im übrigen einen besonderen optischen und taktilen Reiz ausüben kann.

Die Herstellung derartiger furnierter Platten erfolgt in der Regel an getrennten Orten. Die Furnierindustrie messert geeignetes Naturholz mit einer Dicke von üblicherweise 0,5 bis 0,9 mm und einer Breite von über 10 cm und liefert die Furniere anschließend an die Platten-, Türen-, Möbelwerke bzw. an den Handel. Beispielsweise presst die Plattenindustrie die angelleferten Furniere auf Tischler-, Span-, HDF-, MDF- oder Multiplexplatten mit Dicken von typischerweise 5 bis 50 mm. Vor dem Verpressen der dünnen Furniere sind die einzelnen Furnierblätter Stoß an Stoß miteinander zu verbinden. Dies geschieht konventionell dadurch, dass die nebeneinander gelegten Furniere durch zick-zock-verlegte leimbeschichtete Polyesterfäden miteinander verbunden werden, um ein Auseinanderdriften der Furniere beim Pressen zu vermeiden. In neuerer Zeit ist man dazu übergegangen, die Furniere Stoß an Stoß, d.h, ohne sich zu überlappen, zu verleimen.

Beim Verpressen wird Harnstoff- oder Weißleim bzw, geeignetes Mischungen daraus, verwendet. Die bei der Plattenindustrie zur Verpressung von Furnieren auf Platten verwendeten Furnierpressanlagen sind dabei so ausgelegt, dass die typischerweise benötigten Drücke von 612 kg/cm² erreichbar sind, bei einer Temperatur von 95 bis 140° C. Nach einer Ruhephase zum Aushärten des Leims und Abkühlen der furnierten Platte führt der Plattenhersteller in der Regel einen sogenannten Grundschliff durch, bei dem im Hinblick auf das spätere Lackieren und Schleifen der Platte ein möglichst planer Untergrund geschaffen werden soll. Nach dem Verpressen weist die Platte nämlich Unebenheiten auf, die auch verursacht werden durch die Auskühlung bzw. Austrocknung der verpressten Platte, Unebenheiten und Inhomogenitäten in der Trägerplatte bzw. dem Furnier.

Diese Abweichungen betragen vor dem Grundschliff üblicherweise rund 0,3 mm, weshalb dünnere Furniere, d.h, solche mit weniger als 0,5 mm Stärke, üblicherweise bei dem obigen Verfahren nicht verwendet werden können. Derartige Stärken würden nämlich das Risiko erhöhen, dass beim Grundschliff oder den späteren Zwischen- bzw. Feinschliffen partiell das Furnier vollständig abgetragen, die Trägerplatte somit sichtbar und damit die Platte unbrauchbar wird.

Furnierte Platten mit Grundschliff werden in den Handel gebracht bzw, an Möbelhersteller und Schreiner verkauft. Diese führen eine weitere Oberflächenbehandlung durch, die im wechselweisen Schleifen und Lackieren besteht. Die dort eingesetzten Schfeifmascninen kosten ca. EUR 15,000,00 und sind ausreichend, um Furniere mit einer Stärke von 0,5 bis 0,9 mm zu bearbeiten, ohne dass die Gefahr besteht, dass partiell das Furnier durchgeschliffen wird.

Aus Ländern mit geringen Personalkosten ist ein weiteres Verfahren zur Herstellung furnierter Platten bekannt, bei dem Materialkosten sparend dünnere, beispielsweise ca. 0,3 mm starke, Furniere verwendet werden. Dabei wird das Grundholz zunächst in einer Dämpfgrube gedämpft bzw. gekocht, um die Schneidbarkelt, Geschmeidigkeit und Verarbeitbarkeit zu gewährleisten. Vom derart durchnässten Holz werden 0,3 mm dicke Furnierbahnen abgemessert und Blatt für Blatt auf die auf vorbeleimte Trägerplatte gelegt, ohne dass zuvor ein Fügen, beispielsweise Stoß an Stoß oder mittels beleimter Polyesterfäden, erfolgt ist. Die Blätter werden im noch vom Messern feuchten Zustand leicht überlappt auf die Trägerplatte aufgelegt und der Furnierstoß wird anschließend aufwendig manuell mit einer Ziehklinge gesäubert, so dass einerseits die Unebenheit beseitigt ist und andererseits die Trägerplatte nicht durchscheint. Dies ist ein besonders arbeitsintensiver Vorgang, der nicht maschinell erfolgen kann. Erst danach wird die mit Furnier belegte Grundplatte in eine konventionelle Furnierpresse eingefahren, die mit ca. 6 - 12 kg/cm² verpresst. Einem sehr hohen Personalaufwand steht daher eine bis zu 80% höhere Ausbeute bei der Furnierproduktion gegenüber. Jedoch ist die spätere Verarbeitung der derart hergestellten Platten aufgrund der hohen Qualitätsansprüche insbesondere In Europa problematisch. Ein normaler Tischler mit seinen Schleifmaschinen für ca. EUR 15.000,00 ist nicht in der Lage den Schleif- und Lackierprozess zu bewerkstelligen, da die ihm zur Verfügung stehende Schleifvorrichtung die Unebenheiten nicht berücksichtigen kann und daher partiell das Furnier bis auf den Untergrund abschleift, bzw, er mit diesem Produkt den in Europa bestehenden Qualitätsansprüchen nicht gerecht wird

Das Problem besteht also darin, dass die Furnierindustrie an die Platten-, Türen-, Möbelwerke bzw, an den Handel liefert, die ihrerseits unterschiedliche technische Möglichkeiten der Bearbeitung aufweisen. Daher stellt die derzeit gängige Furnierstärke von 0,5 bis 0,6 mm einen Kompromiss dar, mit dem fast weltweit die verarbeitenden Betriebe gut zurecht kommen, abgesehen von den USA bzw, der Schweiz, die üblicherweise Materialstärken von 0,65 mm bzw. 0,9 mm benötigen. Außerdem sind sogenannte "Furnierlaminate" bekannt, bei denen eine oder mehrere Schichten von Papier mit einem Furnier und einem Overlay laminiert werden, Dadurch erhält man flexibles und leicht zu verarbeitendes Furnlerlaminat, welches auf Platten geklebt werden kann. Das Overlay ist dabei eine paplerähnliche Fläche mit guter Transparenz, die mit Melamin-Harz oder Melamin-Phenol-Harz imprägniert ist und über Melamin-Harz oder Melamin-Phanol-Harz mit dem Furnier verbunden ist, Das Vorhandensein von Papier kann aber auch optisch störend sein.

DE-A 196 53 899 offenbart eine furnierte Platte mit einer Trägerplatte und einem Furnier, welches mit einer Oberfläche der Trägerplatte verbunden Ist, wobei ein Overlay auf der der Trägerplatte abgewandten Seite des Furniers vorhanden ist.

US-A-5 955 203 offenbart eine beschichtete Platte mit einer Trägerplatte und einem kunststoffbeschichteten Overlay, welches mit einer Oberfläche der Trägerplatte verbunden ist.

US-A-5 089 348 und US-A-5 955 203 offenbaren den Einsatz von einem Overlaypapler bei laminierten Platten.

Es ist daher Aufgabe der Erfindung, eine verbesserte Furnierplatte anzugeben.

Diese Aufgabe wird gelöst durch eine furnierte Platte mit den Merkmalen des Hauptanspruchs. Vorteilhafte Ausgestaltungen sind Gegenstand der Unteransprüche.

Erfindungsgemäß ist vorgesehen, dass das Furnier einer furnlerten Platte mit einem Overlay versehen ist. Unter einem Overlay Im Sinne der Erfindung wird verstanden, dass eine vorbereite flächige Schicht auf das Furnier gelegt wird und anschließend mit dem Furnier eine Verbindung eingeht um dieses vor Umwelteinflüssen zu schützen und die Gebrauchstauglichkeit zu gewährleisten. Das einfachste denkbare Overlay ist eine Bahn aus einem einzigen Material, z. B. eine Bahn aus Harz ohne Papier. Insbesondere schützt das Overlay vor Beschädigung bzw, partiellem Abtrag des Furniers, Verschmutzung und dem Eindringen von Staub in das Furnier, Ein Overlay im Sinne der Erfindung ist daher als Abgrenzung gegen die Lackschicht nach dem Stand der Technik zu verstehen, die z. B. durch Lackieren, Aufpinseln oder Aufsprayen erfolgt.

Ein Vorteil der erfindungsgemäß furnierten Platte mit Overlay ist daher darin zu sehen, dass vor der Oberflächenbehandlung keine Lackleranlage zum Einsatz kommen muss. Gerade für Platten mit größeren Breiten, bspw, ab 1 ,3 m gibt es keine entsprechenden Lackieranlagen am Markt. Darüber hinaus entfallen beim Verarbeiter die in der Furnierplattenverarbeitung üblichen arbeitsintensiven und umweltschädlichen Arbeitsschritte: Grundschliff, Grundlack, Zwischenschliff, Decklack. Lackierkammern bzw, Lackierstraßen, die für jeden Betrieb hohe investitionen, sowie laufende Kosten insbesondere wegen der Entsorgungsproblematik bedeuten, sind überflüssig. Außerdem ist Overlay gleichwertiger oder besser bezüglich der Oberflächenempfindlichkeit als Lack, wie diesbezügliche Tests in Bezug auf die Kratz-, Hitze- und Feuchteresistenz gezeigt haben. Außerdem stellt die erfindungsgemäß furnierte Platte mit Overlay anstelle Lack die wesentlich günstigere Variante dar. Beispielsweise betragen die geschätzten Kosten pro m² beidseitig furnierter Platte bei Overlayverpressung (Material + Pressvorgang) ca. EUR 2,00 während eine beidseitig lackierte Fläche mit allen Schritten je nach technischer Ausstattung Kosten zwischen EUR 6,00 und EUR 9,00/m² verursacht. Durch das Overlay können ferner in einem Arbeitsgang dickere Schichten als beim Lackieren aufgetragen werden. Im Gegensatz zum Lackiervorgang wird erfindungsgemäß das Aufbringen mehrerer Lackschichten ersetzt. Der Schreiner oder der Möbelhersteller muss die erfindungsgemäßen Furnierplatten lediglich zuschneiden und hat keine Arbeit mit der Oberflächenveredelung.

Die erfindungsgemäß aufgebaute furnierte Platte ermöglicht Arbeits- und Kosteneinsparungen unabhängig von der Stärke des Furniers. Darüber hinaus hat es den Vorteil, dass nach dem Stand der Technik nicht einsetzbare bzw. nur mit erheblichem Arbeitsaufwand wendbare, geringe Furnierstärken mit weniger als 0,5 bzw. 0,4 oder gar 0,3 mm einsetzbar sind.

Wenn wie in einem Ausführungsbeispiel das Overlay Kleber, insbesondere Harz, wie bspw, Melamin-Harz oder Melamin-Phenol-Harz enthält, kann auf besonders bewährte, bekannte und gut verarbeitbare Klebstoffe zurückgegriffen werden, die bspw. aus der Laminatfußbodenfertigung bekannt sind. Somit entfällt die Entwicklung geeigneter Klebstoffe und es kann auf die bestehende umfangreiche Dokumentation zurückgegriffen werden. Außerdem ist bei diesem Werkstoff das Langzeitverhalten bekannt, Dadurch sinken die Forschungs- und Entwicklungskosten, Melamin-Phenol-Harz ist besonders flexibel.

Wenn das Overlay unmittelbar an das Furnier angrenzt, d.h. zwischen dem Overlay und dem Furnier außer dem Kleber keine weiteren Substanzen eingeschlossen sind, vereinfacht sich die Verarbeltbarkelt und die Kosten sinken. Beispielsweise ist es bei Laminatfußböden bekannt, zwischen Dekorpapier und Overlay abriebshemmende Substanzen einzubringen. Da die Belastung der Oberflächen bei Platten, die für die Möbelindustrie oder für Wandpaneele verwendet werden wesentlich geringer sind, ist es hier ausreichend, wenn das Overlay unmittelbar an das Furnier angrenzt.

Wenn das Furnier unmittelbar an die Trägerplatte angrenzt, d,h, außer den übilcherweise verwendeten Klebstoff, meist Leim, keine weiteren Zwischenschichten zwischen Furnier und Trägerplatte vorhanden sind, wird eine einfache, unmittelbare und daher kostensparende und arbeitsschrittsparende Verbindung hergestellt. Das aus dem Stand der Technik vorbekannte sogenannte "Furnlerlaminat" weist dagegen unterhalb des Furniers als Träge eine oder mehrere Papierschichten auf. Dagegen Ist die erfindungsgemäße furnierte Platte einfacher aufgebaut und erfordert weniger Zwischenschritte zum Herstellen einer Verbindung von Furnier mit Trägerplatte.

Erfindungsgemäß ist vorgesehehn, dass das Overlay durch Verpressen mit dem Furnier verbunden ist. Das Verpressen bietet verschiedene Vorteile. Es ist weniger umweltschädlich als das Lackleren, da keine umweltrelevanten flüchtigen Substanzen beim Pressvorgang freigesetzt werden. Der hohe Genauigkeit und Investitionen erfordernde Grundschliff ist beim Endverarbeiter, beispielsweise Schreiner und dergleichen, nicht notwendig. Dieser kann nämlich In der Regel in die sehr teuren Maschinen nicht Investieren.

Dadurch Ist es ferner möglich kostengünstigere, da dünner, Furniere von weniger als den üblichen 0,5 mm Stärke zu verwenden, Durch entsprechende Auswahl der Pressflächen kann das Overlay glänzende, matte oder strukturierte Oberflächen erhalten, bspw. eine strukturierte Oberfläche, die der Oberfläche von natürlichem Holz ähnelt und vergleichbare taktlle Eigenschaften aufweist. Zum Erzielen einer glatten Oberfläche Ist auch daher kein abwechselnd wiederholtes Schleifen und Lackieren erforderlich. Das Verpressen kann beispielsweise durch Kurztaktpressen oder Kalanderpressen erfolgen. Furnierpressen sind nicht geeignet, da sie nicht den erforderlichen Druck von ca. 20 - 30 kg/cm² aufbringen können.

Erfindungsgemäß Ist vorgesehen, dass das Overlay ein Overlaypapier umfasst, Dieses hat den Vorteil, dass es als Träger für die Klebstoffschlcht dient. Dadurch kann das Overlay sicherer und einfacher separat hergestellt, transportiert und schließlich sicher in die Presse gebracht werden.

Das imprägnieren des Overlays mit Kleber erleichtert die Verbindung von Overlay mit Furnier unter Druck und hohen Temperaturen, da ähnlich einem Puffer reichlich Kleber zur Verfügung steht. Das Verpressen gelingt sicherer. Durch Aufbringen von Druck und Temperatur wird Transparenz erzielt.

Es ist ferner bevorzugt, dass das Overlaypapier mindestens 80%, vorzugsweise über 99% und besonders bevorzugt 100% aus Zellulose besteht. Die Verwendung von Zellulose hat den Vorteil, dass nahezu absolute Transparenz erreicht wird. Dabei ist Nadelholz- oder Eukalyptuszelistoff bevorzugt, da er preiswert und gut verfügbar ist.

in Versuchen hat sich gezelgt, dass das Flächengewicht (Grammatur) des Overlaypapiers zwischen 25 und 80 g/m² besonders gut einsetzbar Ist In Bezug auf die Penetrationsgeschwindigkelt, Saughöhe und Porosität. Wenn dieser Bereich nach unten bzw, nach oben verlassen wird, ergeben sich Risse in der Oberfläche bzw. eine milchige Oberfläche.

Die in den Ansprüchen angegebenen technischen Eigenschaften des Overlaypapiers in Bezug auf Penetrationsgeschwindigkeit, Saughöhe und Porosität erleichtern die Imprägnierung des Overlays, d.h. die Verbindung von dem Kleber, insbesondere Melamin-Harz, mit dem Overlaypapier zur Erzeugung eines Overlays und erleichtert darüber hinaus die Verbindung von dem derart hergestellten Overlay mit dem Furnier, insbesondere durch Verpressen, Die anspruchsgemäß genannten Parameter ermöglichen, insbesondere in Kombination, ein hervorragendes Blattbild, geringes Flächengewicht, hohes Volumen, hohe Dimensionsstabilität, hohe Porosität und große Saughöhe. Bei der Imprägnierung des Overlaypapiers ist dabei sichergestellt, dass viel Harz aufgenommen wird in kurzer Zeit, wobei eine sehr gute Harzverteilung im x-, y- und z-Richtung bewirkt wird. Insbesondere wird der Waschbretteffekt, d. h. ein welliges Oberflächenblid, vermieden. Die zuvor genannten Parameter bewirken außerdem, dass nach dem Verpressen eine sehr gute Transparenz, die den Blick frei auf das Furnier gibt, erreicht wird. Sogenannte Milky-Ways, d. h. Zonen trüber Transparenz, werden vermieden und es ergibt sich ein glelchmäßiger Abrieb. Ein derartiges Overlay kann problemlos mit unimprägnierten Furnieren, d.h. Furnieren, die keine eigene Klebstoffschicht (Melamin und dergleichen) aufweisen, verbunden werden. Schließlich sind derartige Overlays bedruckbar. Ein derartiges für die Herstellung einer erfindungsgemäßen Platte geeignetes Overlaypapier wird von der Firma Schoeller und Hoesch unter dem Namen TVO-Overlaypapier angeboten.

Weitere Vorteile ergeben sich aus der folgenden Beschreibung und der beigefügten Zeichnung. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter.

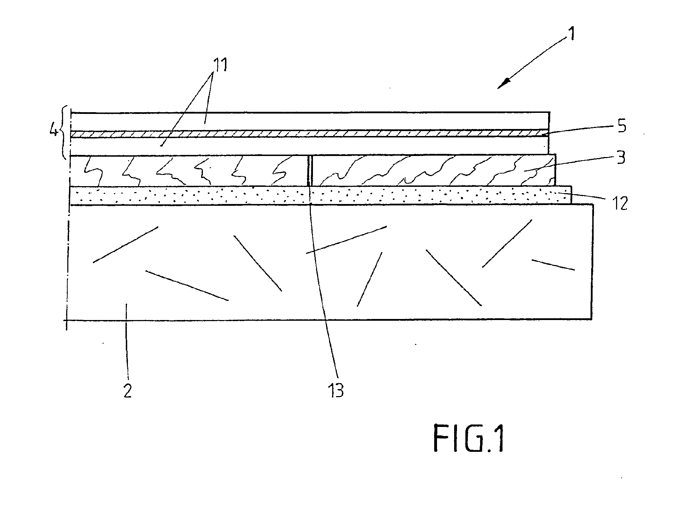

Fig. 1 zeigt eine erfindungsgemäß aufgebaute furnierte Platte 1 , bei der das Naturholzfurnier 3, bestehend aus mehreren auf Stoß 13 miteinander verbundenen Einzelfurnieren, auf einer Trägerplatte 2 befestigt ist und durch eine darüber liegende Schutzschicht aus einem Overlay 4 gegen Umgebungseinflüsse geschützt ist. Dabei wurde mittels einer konventionellen Furnierpresse das Furnier 3 mittels eines Leims 12 mit der Trägerplatte 2 verpresst.

In einem weiteren Arbeitsschritt wurde das Overlay 4, bestehend aus mit Harz 11 imprägnierten Overlaypapier 5, beispielsweise TVO, mit dem Furnier 5 verpresst. Durch Versuche mit der Presse Siempelkamp wurden beispielhaft folgende Werte ermittelt: Presstemperatur 1 74 °C, Pressdruck 22 kg/cm², Presszeit 24 sec, Papiergewicht des Overlaypapiers 25 g/m² und Blech: sm (seidenmatt).

Dabei wurden TVO-Overlaypapiere eingesetzt mit einem Flächengewicht (Grammatur) von 25 g/m², getränkt mit Melamin -Harz mit 62 g/m² Harzanteil, so dass das getränkte Papier ein Gesamtgewicht von 87 g/m² aufweist. Bei 40 g TVO-Overlaypapier ergab sich ein Harzanteil von 85 g/m² und ein Gesamtgewicht von 125 g/m².

## Patentansprüche

1. Furnierte Platte (1) mit einer Trägerplatte (2) und einem Furnier (3), welches mit zumindest einer Oberfläche der Trägerplatte (2) verbunden ist,
wobei eine vorbereitete flächige Schicht als Overlay (4) auf der der Trägerplatte (23) abgewandten Seite des Furniers (3) vorgesehen ist, das Overlay durch Verpressen mit dem Furnier verbunden ist, und das Overlay ein Overlaypapier umfasst, welches mit einem Kleber imprägniert ist;
wobei das Furnier (3) aus mehreren Stoß auf Stoß gefügten Blättern besteht, die vor der Verbindung mit der Trägerplatte durch Verklebung der Stoßkanten (13), beispielsweise mittels Leim. zusammengehalten sind.

2. Platte nach Anspruch 1, **dadurch gekennzeichnet, dass** das Overlay (4) eine Schicht (11) aus Kleber, insbesondere Harz, beispielsweise Melamin oder Melamin Phenol, umfasst, die mit dem Furnier (3) verbunden ist.

3. Platte nach einem der vörherigen Ansprüche, **dadurch gekennzeichnet, dass** das Overlay (4) unmittelbar an das Furnier (3) angrenzt.

4. Platte nach einem der vorherigen Ansprüche, **dadurch gekennzeichnet, dass** das Furnier (3) unmittelbar an die Trägerplatte (2) angrenzt.

5. Platte nach einem der vorherigen Ansprüche, **dadurch gekennzeichnet, dass** das Furnier (3) eine Dicke von 0,1 - 1,8 mm, vorzugsweise 0,2- 0,6 mm und Insbesondere 0,25 - 0,4 mm hat.

6. Platte nach einem der vörherigen Ansprüche, **dadurch gekennzeichnet, dass** das Overlaypapier (4) mit einem Harz, beispielsweise Melamin oder Melamin- Phenol imprägniert ist.

7. Platte nach einem der vorherigen Ansprüche, **dadurch gekennzeichnet, dass** das Overlaypapier aus mindestens 80%. vorzugsweise über 99% und Insbesondere vorzugsweise 100% aus Zellulose, vorzugsweise Nagelholz- und/oder Eukalyptuszellstoff besteht.

8. Platte nach einem der vorherigen Ansprüche, **dadurch gekennzeichnet, dass** das Overlaypapier Flächengewicht von 25 bis 80 g/m² aufweist.

9. Platte nach einem der vorherigen Ansprüche, **dadurch gekennzeichnet, dass** das Overlaypapier eine Penetrationsgeschwindlgkeit von weniger als 4 Sec, eine Saughöhe nach Klemm von mindestens 50, vorzugsweise 150 mm Igs und/oder eine Porosität von mehr als 50, vorzugsweise 300 l/m² s aufweist.

10. Verfahren zum Herstellen einer furnierten Platte (1) mit einer Trägerplatte (2) und einem Furnier (3), welches mit zumindest einer Oberfläche der Trägerplatte (2) verbunden ist, mit folgenden Schritten:
- Bereitstellen des Furniers (3), bestehend aus mehreren Stoß auf Stoß gefügten Blättern, die vor der Verbindung mit der Trägerplatte durch Verklebung der Stoßkanten (13) zusammengehalten sind
- Verpressen des Furniers mittels eines Leimes (12) mit der Trägerplatte (2);
- Bereitstellen einer vorbereitete flächige Schicht als Overlay (4), welches ein Overlaypapier umfasst, welches mit einem Kleber imprägniert ist;
- in einem weiteren Arbeitsschritt Verpressen des Overlays mit dem Furnier auf der der Trägerplatte (23) abgewandten Seite des Furniers (3).

## Claims

1. Veneered panel (1) with a supporting panel (2) and a veneer (3) joined with at least one surface of the supporting panel (2),
wherein a prepared flat layer is provided as an overlay (4) on the side of the veneer (3) facing away from the supporting panel (23), the overlay being joined to the veneer by pressing, and the overlay comprising an overlay paper;
wherein the veneer (4) consists of several sheets joined edge to edge that are held together by gluing the edges (13), for example by means of glue, prior to joining them with the supporting panel.

2. Panel according to claim 1, **characterized in** the overlay (4) comprising a layer (11) of adhesive, in particular resin, for example melamine or melamine phenol, joined with the veneer (3).

3. Panel according to one of the preceding claims, **characterized in** the overlay (4) bordering directly on the veneer (3),

4. Panel according to one of the preceding claims, **characterized in** the veneer (3) bordering directly on the supporting panel (2),

5. Panel according to one of the preceding claims, **characterized in** the veneer (3) having a thickness of 0.1 - 1.8 mm, preferably 0.2 - 0.6 mm, and in particular 0.25 - 0.4 mm.

6. Panel according to one of the preceding claims, **characterized by** the overlay paper (4) being impregnated with a resin, for example melamine or melamine phenol.

7. Panel according to one of the preceding claims, **characterized by** the overlay paper consisting of at least 80%, preferably more than 99% and particularly preferably 100% cellulose, preferably softwood and/or eucalyptus pulp.

8. Panel according to one of the preceding claims, **characterized by** the overlay paper having a basis weight of 25 to 80 g/m².

9. Panel according to one of the preceding claims, **characterized by** the overlay paper having a penetration rate of less than 4 sec, a suction head according to Klemm of at least 50, preferably 150 mm Igs and a porosity of more than 50, preferably 300 l/m² s

10. Method for producing a veneered panel (1) with a supporting panel (2) and a veneer (3) joined with at least one surface of the supporting panel (2), comprsing the following steps:
- providing the veneer (3) consisting of several sheets joined edge to edge that are held together by gluing the edges (13), for example by means of glue, prior to joining them with the supporting panel,
- pressing the veneer with the supporting panel (2) using a glue (1 2);
- providing a prepared flat layer as an overlay (4) comprising an overlay paper impregnated with an adhesive;
- in a further process step pressing the overlay with the veneer on the side of the veneer (3) facing away from the supporting panel (23).

## Revendications

1. Plaque plaquée (1) comprenant une plaque de support (2) et un placage (3) qui est relié à au moins une surface de la plaque de support (2),
dans laquelle on prévoit une couche plate préparée à titre de revêtement (« overlay ») (4) sur le côté du placage (3) qui se détourne de la plaque de support (23), on relie le revêtement au placage par compression, le revêtement comprenant un papier de revêtement qui est imprégné d'un adhésif ;
le placage (3) étant constitué par plusieurs feuilles jointes bout-à-bout qui sont maintenues ensemble, avant la liaison avec la plaque de support, par collage des arêtes de joints (13), par exemple avec de la colle.

2. Plaque selon la revendication 1, **caractérisée en ce que** le revêtement (4) comprend une couche (11) constituée d'un adhésif, en particulier d'une résine, par exemple de mélamine ou de mélamine-phénol, qui est reliée avec le placage (3).

3. Plaque selon l'une quelconque des revendications précédentes, **caractérisée en ce que** le revêtement (4) est directement contigu au placage (3).

4. Plaque selon l'une quelconque des revendications précédentes, **caractérisée en ce que** le placage (3) est directement contigu à la plaque du support (2).

5. Plaque selon l'une quelconque des revendications précédentes, **caractérisée en ce que** le placage (3) possède une épaisseur de 0,1 à 1,8 mm, de préférence de 0,2 à 0,6 mm, et en particulier de 0,25 à 0,4 mm.

6. Plaque selon l'une quelconque des revendications précédentes, **caractérisée en ce que** le papier de revêtement (4) est imprégné avec une résine, par exemple avec de la mélamine ou avec de la mélamine-phénol.

7. Plaque selon l'une quelconque des revendications précédentes, **caractérisée en ce que** le papier de revêtement est constitué, à concurrence d'au moins 80 %, de préférence à concurrence de plus de 99 % et de manière particulièrement préférée à concurrence de 100 % par de la cellulose, de préférence de la cellulose de conifère et/ou de la cellulose d'eucalyptus.

8. Plaque selon l'une quelconque des revendications précédentes, **caractérisée en ce que** le papier de revêtement présente un grammage de 25 à 80 g/m².

9. Plaque selon l'une quelconque des revendications précédentes, **caractérisée en ce que** le papier de revêtement présente une vitesse de pénétration inférieure à 4 secondes, une hauteur d'aspiration après serrage d'au moins 50, de préférence de 150 mm/g s et/ou une porosité est supérieure à 50, de préférence de 300 1/m² s.

10. Procédé pour la fabrication d'une plaque plaquée (1) comprenant une plaque de support (2) et un placage (3) qui est relié à au moins une surface de la plaque de support (2), comprenant les étapes suivantes consistant à :
- procurer le placage (3) constitué par plusieurs feuilles jointes bout-à-bout qui sont maintenues, avant la liaison à la plaque de support, par collage des arêtes de joints (13) ;
- comprimer le placage au moyen d'une colle (12) avec la plaque de support (2) ;
- procurer une couche plate préparée pour faire office de revêtement (4), qui comprend un papier de revêtement qui est imprégné avec un adhésif ;
- dans une étape opératoire ultérieure, comprimer le revêtement avec le placage sur le côté du placage (3) qui se détourne de la plaque de support (23).
